# EUROPEAN PATENT SPECIFICATION

(11) **EP 2 521 434 B1**
(45) Date of publication and mention of the grant of the patent: **30.04.2014**
(21) Application number: 11700023.2
(22) Date of filing: 05.01.2011
(51) Int. Cl.: A01D 41/12

(54) **COMBINE**
MÄHDRESCHER
MOISSONNEUSE-BATTEUSE

(30) Priority: 05.01.2010 BE 201000007
(43) Date of publication of application: 14.11.2012
(73) Proprietor: CNH Industrial Belgium nv, 8210 Zedelgem (BE)
(72) Inventor: YDE, Luc, Alexa, B-9968 Bassevelde (BE)
(74) Representative: CNH Industrial IP Department
(86) International application number: PCT/EP2011/050108
(87) International publication number: WO 2011/083128

(56) References cited:
- EP-A1- 1 461 993
- EP-A1- 2 138 024
- EP-A2- 0 357 090
- US-A1- 2009 156 277

## Description

### Technical Field

The present invention relates to a combine harvester having a header for gathering crop from a field, threshing and separation mechanisms for separating the crop into grain, stalks and chaff, and a stalk discharge system.

### Background Art

A combine harvester is an agricultural machine that automates the harvesting of crops, such as cereals and grass. As the construction of combine harvesters is well known and documented, it will only be described herein to the extent necessary to permit an understanding of the present invention.

At its front end, a combine harvester has a header which cuts the crop and transports it into a threshing mechanism. The threshing mechanism makes use of a beating action to remove the grain from the stalks and crushes the husks to produce chaff before passing the crop on to a separation mechanism. So-called "straw walkers" in the separation mechanism pick up only the stalks, which may be straw or blades of grass, and transport them to the back of the harvester. The grain and the chaff drop onto oscillating sieves that separate the grain from the chaff. The grain falls through the sieves and is collected and stored in a grain tank.

The chaff is a waste product that drops off the rear end of the sieves and is allowed to fall on the ground to act as a nutrient. Harvesters may have a spreader arranged at the rear end of the sieves to distribute the chaff evenly on the ground.

The present invention is concerned primarily with the stalk discharge system, which processes the stalks in different ways depending on how they are to be utilised.

Combine harvesters that are currently manufactured by the present applicant have a stalk discharge system which incorporates a chopper, a spreader and flow control guides that define multiple operator configurable flow paths for the stalks. In a first flow path, the stalks pass sequentially through the chopper and the spreader. They are chopped by the chopper then passed on to the spreader which evenly distributes them over the ground traversed by the header. In a second flow path, the stalks bypass the chopper and the spreader and are deposited as a swath on the ground.

During the grass seed harvest, the combine harvester is set in swathing mode as the grass is later to be formed into bales. The threshed grass is not chopped but is deposited behind the combine harvester in swaths or windrows. However, in order that the grass may dry out for baling, it is necessary to spread the grass swaths evenly over the surface of the field and this is a carried out using a tractor equipped with suitable spreading implement. Consequently, more man hours and fuel need to be expended in preparing the grass before it can be baled. Such a harvester is known for example from EP2138024.

During maize harvest, also the maize cobs and associated leaves are chopped and spread behind the combine. This however uses a lot of power and fuel. Swathing these cobs and leaves is not an option as it would create uneven field conditions.

### Disclosure of Invention

### Technical Problem

The present invention seeks to improve efficiency by enabling a combine harvester to deposit the grass in a form in which it will dry out more quickly and be ready sooner for baling, without the need to carry out further work on the grass once the combine harvester has completed its task.
Alternatively the present invention also seeks a simple and efficient system to spread maize cobs and associated leaves without the necessity of chopping them.

### Technical Solution

In accordance with the present invention, there is provided a combine harvester comprising:
- a header for gathering crop from a field; and
- threshing and separation mechanisms for separating the crop into grain, stalks and chaff; and
- a stalk discharge system, whereby the stalk discharge system comprises a chopper, a spreader and flow control guides for defining multiple operator configurable flow paths through the stalk discharge system, wherein the flow paths comprise a first flow path in which the stalks pass sequentially through the chopper and the spreader to be chopped and evenly distributed over the ground just traversed by the header, a second flow path in which the stalks bypass the chopper and the spreader to be deposited as a swath on the ground, and a third flow path in which the stalks enter the spreader without first passing through the chopper, to be evenly distributed un-chopped over the ground just traversed by the header, the spreader comprises two rotors that are counter-rotatable and a shielding partially surrounding the rotors, there being a rear opening in the shielding for admitting into the spreader stalks chopped by the chopper when the stalks follow the first flow path CHARACTERISED IN THAT in the third flow path the flow control guides comprise a rear cover for the rear opening in the shielding of the spreader to prevent back flow of the stalks from the spreader into the chopper.

Patent EP1461993 and US2009/0156277 disclose a combine harvester having at its rear end a crop residue chopper and a deflector plate for defining three different paths which the crop residue discharged from the rear end of the combine harvester may follow. When the deflector plate is taking its first position, it directs the crop residue into the chopper. When the plate is in its second position, it will direct the crop residue forward of the chopper, thus bypassing the chopper and when the plate is in its third position, it will direct the crop residue to flow over the top and to the rear of the chopper.

Patent DE3829937 discloses a combine harvester comprising two spreaders. A first spreader for the chaff that is separated from the grain and whereby the non-chopped stalks can be guided to one position to be passed through this spreader. There is however a large difference in the mass flow rate of the stalks and the chaff, and a spreader designed to distribute chaff over the area traversed by the header cannot effectively spread the stalks over the same area. Further this combine harvester comprises a second spreader downstream of the chopper for spreading the chopped stalks that is executed as conventional guiding plates. In the present invention, the spreader used to distribute unchopped stalks is the same spreader as is used to spread the chopped stalks and is therefore designed to cope with the mass flow rate of the stalks, furthermore the combine harvester according to the invention in this way only comprises a single spreader for spreading the non-chopped as well as the chopped stalks.

The spreader preferably comprises two rotors that are counter-rotatable and a shielding partially surrounding the rotors, there being a rear opening in the shielding for admitting into the spreader stalks chopped by the chopper when the stalks follow the first flow path, and in the third flow path the flow control guides comprise a rear cover for the rear opening in the shielding of the spreader to prevent back flow of the stalks from the spreader into the chopper.

Such a spreader with rotors is capable to spread the stalks over a bigger distance which is necessary with broad headers. Furthermore such a spreader is less sensitive to accumulation and clogging during the spreading of non-chopped stalks than a conventional spreader with guide plates.

Conveniently, in the second flow path the stalks pass over a chute prior to their deposition on the ground as a swath, and in that a panel is provided in the chute which is movable or removable to enable the stalks to flow into the spreader when the flow control guides are configured to define the third flow path.

It is possible that the shielding is spaced from the rotors to allow a part of the flow to drop to the ground while the remainder is flung the rotors and deflected by the shielding to achieve the desired even distribution and ground coverage.

Advantageously, the distance between the shielding and the bladed rotors is adjustable.

It is advantageous that in the third flow path, the flow control guides comprise a flow divider that cooperates with the chute to direct the flow of stalks into the volume of the spreader swept by the rotors and to deflect the flow away from the centreline of the spreader.

### Brief Description of Drawings

The invention will now be described further, by way of example, with reference to the accompanying drawings, in which :
- Figure 1 is a view of a known stalk discharge system as seen from the rear of a combine harvester,
- Figure 2 is a schematic side view of the stalk discharge system shown in Figure 1,
- Figures 3 and 4 are views similar view to those of Figures 1 and 2, respectively, of a discharge system embodying the present invention,
- Figure 5 is a perspective view from the rear of the combine harvester of the stalk discharge system in Figures 3 and 4 with the chopper omitted, and
- Figure 6 is a perspective view of the spreader of Figure 5 as seen from its end facing the chopper.

### Mode(s) for Carrying Out the Invention

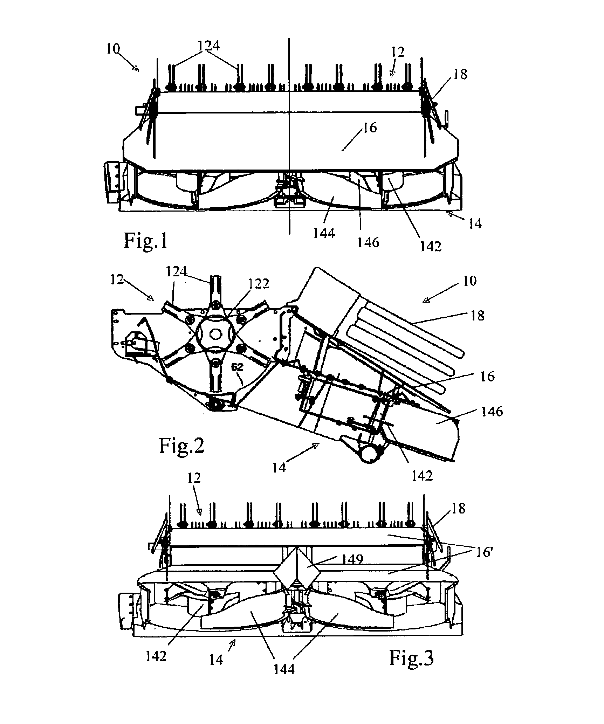

Figures 1 and 2 show a stalk discharge system that is already known and described in EP2138024. These two drawings are described herein only to enable the background to the invention to be understood and the interested reader is referred to the latter specification for a fuller explanation of details that are illustrated but not herein described.

The illustrated stalk discharge system 10 comprises a chopper 12 and a spreader 14. The chopper has a rotor 122 with blades 124 which chop the stalks into smaller pieces. Chopped stalks from the chopper 12 enter the spreader 14 through a rear opening in the casing of the spreader 14.

The spreader 14 comprises two counter rotating rotors 142 with parallel axes slightly inclined to the vertical. Shielding 144 surrounds the rotors 142 and is spaced from the tips of their blades 146. The blades 146 act to fling the stalks out radially and the shielding 144 guides the stalks to disperse them evenly over the ground. Because of the space between the blades 146 and the shielding 144, some of the stalks also fall directly onto the ground so that an even distribution can be achieved across the full width of the strip just traversed by the header of the combine harvester.

In the prior art, a flow control guide (not shown) is arranged above the chopper 12 which may simply be a deflector flap pivotably mounted above the mouth of the chopper. In one position of the flow control guide, the stalks are guided either to drop into the chopper 12 so that they are chopped and then spread in the manner described above. In a second position of the flow control guide, the mouth of the chopper is covered and the stalks are deflected to bypass the chopper 12 and the spreader 14 and to fall onto the ground as a swath for later collection and baling. In this second position, the stalks leaving the straw walkers are guided onto an inclined chute 16 which lies over the spreader 14 so that the stalks fall onto the ground as a swath of which the width is limited by two laterally disposed rakes 18.

A combine harvester of the present invention is capable of discharging stalks in both of the ways described above. However, in addition, the stalks can be guided in a third way, as will now be described with reference to Figures 3 to 6, so that the stalks are evenly spread un-chopped over the full width of the strip traversed by the header of the combine harvester.

In Figures 3 to 6, the stalks are once again prevented from entering the chopper 12 and are guided to drop onto a chute that lies above the spreader 14. In this case, however, comparison of Figures 1 and 3 will show that in place of a chute 16 that totally overlies the spreader 14, a shorter chute 16' is used that terminates near the axis of the rotors 142 so that the stalks drop into the spreader 14.

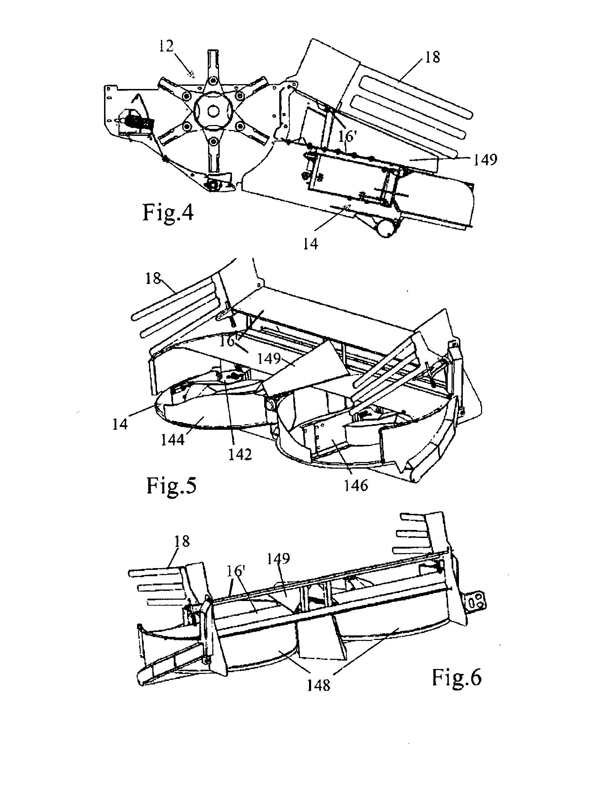

Two further modifications are also made to the discharge system to enable the unchopped stalks to be spread evenly over a wide area. First, as the chopper is not now in use, it is necessary to prevent the talks from being driven back into the chopper as this could cause a blockage. This is achieved by fitting a cover 148 as shown in Figure 6 to the spreader, the cover 148 being shaped to act as an extension of the cylindrical shielding 144 surrounding the rotors 142 of the spreader 14. Second, it is necessary to ensure that the stalks enter one or other of the two halves of the spreader and do not fall to the ground between the two halves. This is achieved by means of a nose 149 centrally mounted above the surface of the chute 16'. The nose 149 is of triangular cross section with inclined sides and its height reduces gradually towards the rear of the combine harvester.

The flow control guides that are operator configurable consist of the deflector mounted above the mouth of the chopper, the chutes 16 and 16', the spreader rear cover 148 and the nose 149. The chute 16 can be formed with a slidable, pivotable or removable flap to act as the chute 16'. The rear cover 148 of the spreader 14 may be formed as a retractable door and the nose 149 may be left in place all the time as its presence would not interfere with the operation of laying the stalks as swaths. Consequently, it is possible to design the flow control guides such as to enable the operator to switch between different operating modes of the stalk discharge system without the need to attach or dismount additional components.

In order to achieve even spreading of the stalks to take into account the prevailing operating conditions, it is possible to provide adjustment of the spreader shielding 144 both to rotate it relative to the axis of the rotor 142 so as to alter the angle at which the stalks leave the spreader 14 and to vary the distance between the shielding 144 and the tips of the blades 146. Such an adjustment may be carried out independently on the two halves of the spreader 14.

It is clear that this system is equally suitable for spreading maize cobs and associated leaves evenly over the field without chopping them and without requiring an additional spreader device.

It will be readily appreciated that various modifications may be made to the described embodiment without departing from the scope of the invention as set out in the appended claims. For example, the spreader may employ rotating rakes in place of blades.

## Claims

1. A combine harvester comprising:
- a header for gathering crop from a field; and
- threshing and separation mechanisms for separating the crop into grain, stalks and chaff; and
- a stalk discharge system (10), whereby the stalk discharge system (10) comprises a chopper (12), a spreader (14) and flow control guides for defining multiple operator configurable flow paths through the stalk discharge system (10), wherein the flow paths comprise a first flow path in which the stalks pass sequentially through the chopper (12) and the spreader (14) to be chopped and evenly distributed over the ground just traversed by the header, a second flow path in which the stalks bypass the chopper (12) and the spreader (14) to be deposited as a swath on the ground, and a third flow path in which the stalks enter the spreader (14) without first passing through the chopper (12), to be evenly distributed un-chopped over the ground just traversed by the header, the spreader comprises two rotors (142) that are counter-rotatable and a shielding (144) partially surrounding the rotors (142), there being a rear opening in the shielding (144) for admitting into the spreader (14) stalks chopped by the chopper (12) when the stalks follow the first flow path, **CHARACTERISED IN THAT** in the third flow path the flow control guides comprise a rear cover (148) for the rear opening in the shielding of the spreader to prevent back flow of the stalks from the spreader (14) into the chopper (12).

2. A combine harvester as claimed in claim 1, **characterised in that** in the second flow path the stalks pass over a chute (16) prior to their deposition on the ground as a swath, and **in that** a panel is provided in the chute (16) which is movable or removable to enable the stalks to flow into the spreader (14) when the flow control guides are configured to define the third flow path.

3. A combine harvester as claimed in claim 2, **characterised in that** the shielding (144) is spaced from the rotors (142) to allow a part of the flow to drop to the ground while the remainder is flung the rotors (142) and deflected by the shielding (144) to achieve the desired even distribution and ground coverage.

4. A combine harvester as claimed in claim 3, **characterised in that** the distance between the shielding (144) and the rotors (142) is adjustable.

5. A combine harvester as claimed in any of claim 2 to 4, **characterised in that** in the third flow path, the flow control guides comprise a flow divider (149) that cooperates with the chute (16) to direct the flow of stalks into the volume of the spreader swept by the rotors and to deflect the flow away from the centreline of the spreader (14).

## Patentansprüche

1. Mähdrescher mit:
- einem Vorsatzgerät zum Sammeln von Erntematerial von einem Feld; und
- Dresch- und Trennmechanismen zum Trennen des Erntematerials in Körner, Stängel und Spreu; und
- ein Stängel-Auswurfsystem (10), wobei das Stängel-Auswurfsystem (10) einen Häcksler (12), eine Streuvorrichtung (14) und Strömungssteuerführungen zur Bildung mehrfacher von der Bedienungsperson konfigurierbarer Strömungspfade durch das Stängel-Auswurfsystem (10), wobei die Strömungspfade einen ersten Strömungspfad, in dem die Stängel aufeinanderfolgend durch den Häcksler (12) und die Streuvorrichtung (14) laufen, um gehäckselt und gleichförmig auf dem Boden verteilt zu werden, über den das Vorsatzgerät gerade hinweg gelaufen ist, einen zweiten Strömungspfad, in dem die Stängel den Häcksler (12) und die Streuvorrichtung (14) umgehen, um als ein Schwad auf dem Boden abgelegt zu werden, und einen dritten Strömungspfad, in dem die Stängel in die Streuvorrichtung (14) eintreten, ohne vorher den Häcksler (12) zu durchlaufen, um gleichförmig ungehäckselt auf dem Boden abgelegt zu werden, über den das Vorsatzgerät gerade hinweg gelaufen ist, wobei die Streuvorrichtung zwei Rotoren (142), die gegensinnig drehbar sind, und eine Verkleidung (144) umfasst, die teilweise die Rotoren (142) umgibt, wobei eine rückwärtige Öffnung in der Verkleidung (144) vorgesehen ist, um in die Streuvorrichtung (14) Stängel einzuleiten, die von dem Häcksler (12) gehäckselt wurden, wenn die Stängel dem ersten Strömungspfad folgen, **dadurch gekennzeichnet, dass** in dem dritten Strömungspfad die Strömungssteuerführungen eine hintere Abdeckung (148) für die rückwärtige Öffnung in der Verkleidung der Streuvorrichtung umfassen, um eine Rückwärtsströmung der Stängel von der Streuvorrichtung in den Häcksler (12) zu verhindern.

2. Mähdrescher nach Anspruch 1, **dadurch gekennzeichnet, dass** auf dem zweiten Strömungspfad die Stängel vor ihrem Ablegen auf dem Boden in Form eines Schwads über eine Rutsche (16) laufen, und dass eine Platte in der Rutsche (16) vorgesehen ist, die beweglich oder entfernbar ist, um es den Stängeln zu ermöglichen, in die Streuvorrichtung (14) zu strömen, wenn die Strömungssteuerführungen zur Bildung des dritten Strömungspfades konfiguriert sind.

3. Mähdrescher nach Anspruch 2, **dadurch gekennzeichnet, dass** die Abschirmung (144) in Abstand von den Rotoren (142) angeordnet ist, um es einem Teil der Strömung zu ermöglichen, auf den Boden zu fallen, während der Rest von den Rotoren (142) geschleudert und durch die Abschirmung (144) abgelenkt wird, um die gewünschte gleichförmige Verteilung und Bodenbedeckung zu erzielen.

4. Mähdrescher nach Anspruch 3, **dadurch gekennzeichnet, dass** der Abstand zwischen der Abschirmung (144) und den Rotoren (142) einstellbar ist.

5. Mähdrescher nach einem der Ansprüche 2 bis 4, **dadurch gekennzeichnet, dass** auf dem dritten Strömungspfad die Strömungssteuerführungen einen Strömungsteiler (149) umfassen, der mit der Rutsche (16) zusammenwirkt, um die Strömung der Stängel in das Volumen der Streuvorrichtung zu lenken, das von den Rotoren überstrichen wird, und um die Strömung von der Mittellinie der Streuvorrichtung (14) fort abzulenken.

## Revendications

1. Moissonneuse-batteuse comprenant :
- un cueilleur pour ramasser un produit agricole d'un champ, et
- des mécanismes de battage et de séparation pour séparer le produit agricole en grains, tiges et résidus, et
- un système d'expulsion de tiges (10), le système d'expulsion de tiges (10) comprenant un hacheur (12), un éparpilleur (14) et des guides de régulation du débit permettant de définir de multiples trajets d'écoulement pouvant être configurés par le conducteur au moyen du système d'expulsion de tiges (10), et les trajets d'écoulement comprenant un premier trajet d'écoulement dans lequel les tiges passent séquentiellement au travers du hacheur (12) et de l'éparpilleur (14) pour être hachées et uniformément réparties sur le sol parcouru par le cueilleur, un second trajet d'écoulement dans lequel les tiges contournent le hacheur (12) et l'éparpilleur (14) afin qu'elle soient déposées sous la forme d'un andain au sol, et un troisième trajet dans lequel les tiges pénètrent dans l'éparpilleur (14) sans passer d'abord à travers le hacheur (12), afin qu'elles soient uniformément réparties sans avoir été hachées sur le sol parcouru par le cueilleur, moyennant quoi l'éparpilleur comprend deux rotors (142) qui tournent en sens inverse et un blindage (144) entourant partiellement les rotors (142), une ouverture arrière étant agencée dans le blindage (144) pour faire entrer dans l'éparpilleur (14) des tiges hachées par le hacheur (12) lorsque les tiges suivent le premier trajet d'écoulement, **CARACTÉRISÉE EN CE QUE**, dans le troisième trajet d'écoulement, les guides de régulation de débit comprennent un couvercle arrière (148) pour l'ouverture arrière dans le blindage de l'éparpilleur afin d'empêcher le reflux des tiges de l'éparpilleur (14) dans le hacheur (12).

2. Moissonneuse-batteuse selon la revendication 1, **caractérisée en ce que** dans le second trajet d'écoulement, les tiges passent sur une goulotte (16) avant d'être déposées sur le sol sous forme d'un andain, et **en ce qu'**un panneau est prévu dans la goulotte (16) qui est mobile ou amovible pour permettre aux tiges de s'écouler dans l'éparpilleur (14) lorsque les guides de régulation de débit sont configurés pour définir le troisième trajet d'écoulement.

3. Moissonneuse-batteuse selon la revendication 2, **caractérisée en ce que** le blindage (144) est espacé des rotors (142) pour permettre à une partie du flux de tomber sur le sol tandis que le restant est lancé dans les rotors (142) et dévié par le blindage (144) pour obtenir la distribution régulière et la couverture du sol souhaitées.

4. Moissonneuse-batteuse selon la revendication 3, **caractérisée en ce que** la distance entre le blindage (144) et les rotors (142) est réglable.

5. Moissonneuse-batteuse selon l'une quelconque des revendications 2 à 4, **caractérisée en ce que** dans le troisième trajet d'écoulement, les guides de régulation de débit comprennent un diviseur de débit (149) qui coopère avec la goulotte (16) pour diriger le flux de tiges dans le volume de l'éparpilleur balayé par les rotors et pour dévier le flux loin de l'axe central de l'éparpilleur (14).
